# EUROPEAN PATENT APPLICATION

(11) **EP 4 674 709 A1**
(43) Date of publication of application: **07.01.2026**
(21) Application number: 25177461.8
(22) Date of filing: 19.05.2025
(51) Int. Cl.: B60T 13/12

(54) **REDUNDANCY BRAKE APPARATUS AND HYDRAULIC BRAKE APPARATUS INCLUDING THE SAME**

(30) Priority: 05.07.2024 KR 20240088922
(71) Applicant: Hyundai Mobis Co., Ltd., Gangnam-gu Seoul 06141 (KR)
(72) Inventor: AHN, Sung Ki, Gyeonggi-do 16891 (KR); JE, Jae Han, Gyeonggi-do 16891 (KR)
(74) Representative: Vossius & Partner Patentanwälte Rechtsanwälte mbB

(57) **Abstract**

A redundancy brake apparatus includes a redundancy hydraulic circuit part connected to a main brake apparatus and a wheel cylinder part of a vehicle to allow brake fluid to flow, and a hydraulic block for auxiliary braking including an oil accommodation part that accommodates the brake fluid and is connected to the redundancy hydraulic circuit part to allow the brake fluid to flow, and an opening formed to allow air to flow into the oil accommodation part.

## Description

### TECHNICAL FIELD

Exemplary embodiments of the present invention relate to a redundancy brake apparatus and a hydraulic brake apparatus including the same, and more particularly, to a redundancy brake apparatus including a separate oil accommodation part from a main brake fluid reservoir, and a hydraulic brake apparatus including the same.

### BACKGROUND

In general, an electronic hydraulic brake apparatus detects driver's pedal pressure through a sensor and adjusts the braking pressure of each wheel through the hydraulic pressure of a master cylinder driven by a motor, based on the detected pedal pressure.

In a case of autonomous vehicles, a redundancy brake part is additionally provided to prevent accidents caused by braking failure in the event of malfunction or breakdown of a main brake part.

The background technology of the present invention is disclosed in Korean Patent Publication No. 10-2023-0073335 (published on May 25, 2023) entitled "Method for controlling a brake system and brake system for vehicles".

### SUMMARY

Various embodiments are directed to a redundancy brake apparatus for accommodating brake fluid for auxiliary braking separately from a main brake fluid reservoir, and a hydraulic brake apparatus including the same.

In an embodiment of the present invention, a redundancy brake apparatus may include: a redundancy hydraulic circuit part connected to a main brake apparatus and a wheel cylinder part of a vehicle to allow brake fluid to flow; and a hydraulic block for auxiliary braking including an oil accommodation part that accommodates the brake fluid and is connected to the redundancy hydraulic circuit part to allow the brake fluid to flow, and an opening formed to allow air to flow into the oil accommodation part.

The redundancy brake apparatus may further include a plug configured to openly close the opening and including a plurality of micropores through which gas passes.

Liquids and solids may not pass through the micropores.

The plug may include a first surface on which the micropores are exposed to the outside of the hydraulic block for auxiliary braking and a second surface on which the micropores are exposed toward the oil accommodation part.

The plug may further include a third surface with closed micropores.

The third surface may be formed by machining to cut the surface of the plug using a tool.

The surface roughness of the third surface may be less than the surface roughness of the first surface and the surface roughness of the second surface.

The plug may be formed by sintering metal powder.

The metal powder may include stainless steel powder.

The plug may include a body part having a male screw pattern formed on an outer surface thereof through the opening, and a female screw pattern that engages with the male screw pattern may be formed on an inner surface of the opening.

The opening may be opened to an upper surface of the hydraulic block for auxiliary braking.

The brake fluid may be injected into the oil accommodation part from outside the hydraulic block for auxiliary braking through the opening.

The redundancy hydraulic circuit part may be installed in the hydraulic block for auxiliary braking.

The hydraulic block for auxiliary braking may include an aluminum alloy material.

A hydraulic brake apparatus according to the present invention may include: a main brake fluid reservoir that accommodates brake fluid; a main brake apparatus configured to provide the brake fluid from the main brake fluid reservoir to a plurality of wheel cylinder parts to brake a vehicle; and a redundancy brake apparatus including a redundancy hydraulic circuit part configured to provide the brake fluid to at least one wheel cylinder part among the plurality of wheel cylinder parts to brake the vehicle when the main brake apparatus malfunctions and connected to the main brake apparatus and the at least one wheel cylinder part to allow the brake fluid to flow, and a hydraulic block for auxiliary braking including an oil accommodation part accommodating the brake fluid therein and connected to the redundancy hydraulic circuit part to allow the brake fluid to flow and an opening formed to allow air to flow into the oil accommodation part.

The redundancy hydraulic circuit part may not be directly connected to the main brake fluid reservoir.

According to the present invention, because a hydraulic block for auxiliary braking includes an oil accommodation part for accommodating brake fluid separately from the main brake fluid reservoir. Accordingly, the degree of freedom in the layout of a hydraulic braking circuit can be increased, making design easy, and the assembly of the hydraulic brake apparatus easy. Therefore, the cost of the hydraulic brake apparatus can be reduced.

Further according to the present invention, even when a malfunction or failure occurs in the main brake apparatus and the main brake fluid reservoir, the redundancy brake apparatus can reliably brake the vehicle. Accordingly, redundancy requirements can be satisfied and the safety of the vehicle can be improved.

### BRIEF DESCRIPTION OF THE DRAWINGS

FIG. 1 is a block diagram schematically illustrating a hydraulic brake apparatus according to an embodiment of the present invention.
FIG. 2 is a configuration view schematically illustrating a hydraulic block for auxiliary braking included in a redundancy brake apparatus according to an embodiment of the present invention.
FIG. 3 is an enlarged cross-sectional view illustrating a plug and an opening of FIG. 2, illustrating a state in which the opening is opened.
FIG. 4 is an enlarged cross-sectional view illustrating a state in which the plug of FIG. 3 closes the opening.
FIG. 5 is an enlarged cross-sectional view of portion "V" of FIG. 4.
FIG. 6 is a plan view of the plug of FIG. 3.
FIG. 7 is a bottom view of the plug of FIG. 3.

### DETAILED DESCRIPTION

Hereinafter, a redundancy brake apparatus and a hydraulic brake apparatus including the same according to an embodiment of the present invention will be described with reference to the accompanying drawings through various exemplary embodiments. For clarity and convenience in description, thicknesses of lines, sizes of constituent elements, and the like may be illustrated in non-exact proportion in the drawings. Terms to be described below have been defined by taking into consideration their functions in the present invention, and may be different depending on a user or operator's intention or practice. Accordingly, such terms should be interpreted based on the overall contents of this specification.

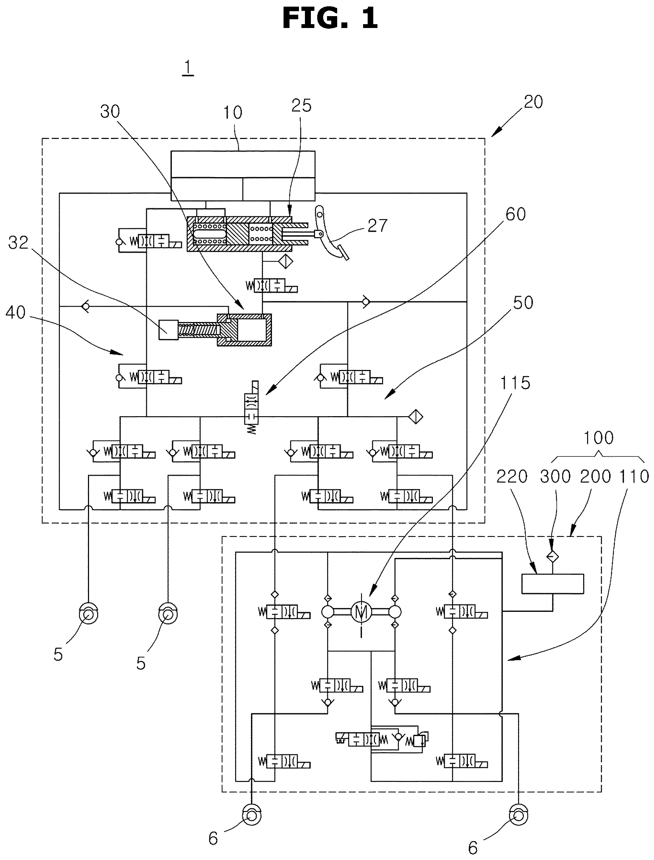

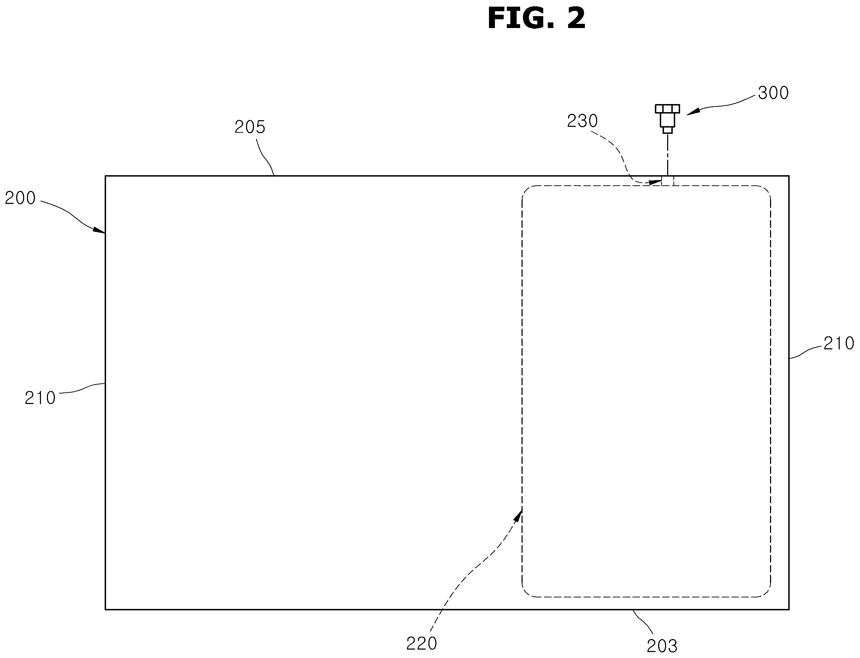

FIG. 1 is a block diagram schematically illustrating a hydraulic brake apparatus according to an embodiment of the present invention. FIG. 2 is a configuration view schematically illustrating a hydraulic block for auxiliary braking included in a redundancy brake apparatus according to an embodiment of the present invention.

Referring to FIG. 1 and FIG. 2, the hydraulic brake apparatus 1 includes a main brake fluid reservoir 10, a main brake apparatus 20, and a redundancy brake apparatus 100.

The main brake fluid reservoir 10 accommodates brake fluid. The main brake apparatus 20 supplies the brake fluid from the main brake fluid reservoir 10 to a plurality of wheel cylinder parts 5 and 6 to brake a vehicle. The main brake apparatus 20 is connected to the main brake fluid reservoir 10 to allow the brake fluid to flow.

The redundancy brake apparatus 100 provides the brake fluid to at least one wheel cylinder part among the plurality of wheel cylinder parts 5 and 6 such that the vehicle is braked when the main brake apparatus 20 is malfunctioning.

The wheel cylinder parts 5 and 6 may include, for example, first wheel cylinder parts 5 disposed on a pair of rear wheels of the vehicle and second wheel cylinder parts 6 disposed on a pair of front wheels of the vehicle. For example, the redundancy brake apparatus 100 may provide the brake fluid to the pair of second wheel cylinder parts 6 to brake the vehicle when the main brake apparatus 20 is malfunctioning. The brake fluid in the oil accommodating part 220 can be supplied to the second wheel cylinder parts 6 by an operation of a motor 115.

The main brake apparatus 20 includes a pedal cylinder part 25, a master cylinder part 30, a first main hydraulic part 40, a second main hydraulic part 50, and a third main hydraulic part 60.

The pedal cylinder part 25 generates hydraulic pressure by pressing a pedal 27. The pedal cylinder part 25 may form two chambers and provide a pedal effort to respond to the pressurization of the pedal 27.

The master cylinder part 30 detects whether the pedal 27 is operated and generates the hydraulic pressure by driving an electric motor 32. The master cylinder part 30 may include a chamber. Depending on the pressurization state of the pedal 27, the electric motor 32 may be driven in the forward or reverse direction. The master cylinder part 30 may be connected to the pedal cylinder part 25 through a cylinder line part.

The first main hydraulic part 40 is connected to the master cylinder part 30 and guides some of the plurality of wheel cylinder parts 5 and 6, for example, a pair of the first wheel cylinder parts 5, to provide brake hydraulic pressure by the brake fluid.

The second main hydraulic part 50 connects the master cylinder part 30 and the redundancy brake apparatus 100 to each other, and guides the remaining wheel cylinder parts among the plurality of wheel cylinder parts 5 and 6, for example, a pair of the second wheel cylinder parts 6, to provide the brake hydraulic pressure by the brake fluid.

The redundancy brake apparatus 100 is connected to the second wheel cylinder parts 6. In the hydraulic brake apparatus 1 illustrated in FIG. 1, the first wheel cylinder parts 5 are disposed on the rear wheels and the second wheel cylinder parts 6 are disposed on the front wheels. However, conversely, the first wheel cylinder parts 5 may be disposed on the front wheels and the second wheel cylinder parts 6 may be disposed on the rear wheels.

The third main hydraulic part 60 connects or disconnects the first main hydraulic part 40 and the second main hydraulic part 50 to or from each other.

In the hydraulic brake apparatus 1 according to the embodiment of the present invention, when an operation error of the main brake apparatus 20 occurs in a brake apparatus of, for example, an electric vehicle, a hybrid vehicle, or an autonomous vehicle, the redundancy brake apparatus 100 can be operated to enable emergency braking. In this case, the operation error of the main brake apparatus 20 may include motor inability to drive or operation errors of various valves controlling a hydraulic circuit.

The redundancy brake apparatus 100 includes a redundancy hydraulic circuit part 110 and a hydraulic block for auxiliary braking 200. The redundancy hydraulic circuit part 110 is connected to the main brake apparatus 20 and at least one wheel cylinder part, for example, the pair of second wheel cylinder parts 6, among the plurality of wheel cylinder parts 5 and 6 to allow the brake fluid to flow.

The hydraulic block for auxiliary braking 200 may include, for example, an aluminum alloy material. The hydraulic block for auxiliary braking 200 may be, for example, a block manufactured by an extrusion molding method and cut into an approximately rectangular shape.

The outer shape of the hydraulic block for auxiliary braking 200 may be defined by a bottom surface 203 and an upper surface 205 that extend horizontally and are spaced apart from each other, a pair of side surfaces 210 that are orthogonal to the bottom surface 203 and the upper surface 205 and are spaced apart from each other, and a front surface and a back surface that are orthogonal to the bottom surface 203, the upper surface 205, and the pair of side surfaces 210 and are spaced apart from each other.

The hydraulic block for auxiliary braking 200 includes an oil accommodation part 220 and an opening 230. The oil accommodation part 220 and the opening 230 are disposed inside the hydraulic block for auxiliary braking 200. The oil accommodation part 220 accommodates the brake fluid.

The oil accommodation part 220 is connected to the redundancy hydraulic circuit part 110 to allow the brake fluid to flow. The redundancy hydraulic circuit part 110 is directly connected to the oil accommodation part 220, but may not be directly connected to the main brake fluid reservoir 10.

The redundancy hydraulic circuit part 110 may be installed in the hydraulic block for auxiliary braking 200. In other words, the redundancy hydraulic circuit part 110 may be disposed inside the hydraulic block for auxiliary braking 200.

The opening 230 is formed in the hydraulic block for auxiliary braking 200 to allow air to flow into the oil accommodation part 220. The brake fluid can be injected from the outside of the hydraulic block for auxiliary braking 200 into the oil accommodation part 220 through the opening 230. For example, when the amount of the brake fluid accommodated in the oil accommodation part 220 is less than an appropriate amount, the brake fluid can be replenished into the oil accommodation part 220 through the opening 230.

The opening 230 includes an opening 231 that is open toward an upper surface 205 thereof such that the brake fluid accommodated in the oil accommodation part 220 does not flow out through the opening 230 due to gravity even when the opening 230 is not closed.

The redundancy brake apparatus 100 may further include a plug 300 that can openly close the opening 230. In other words, the opening 230 may be selectively closed by the plug 300.

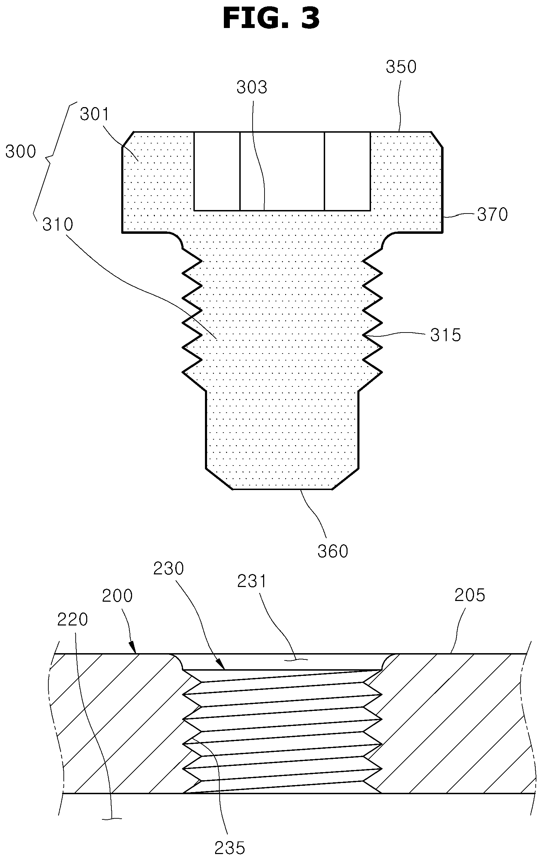

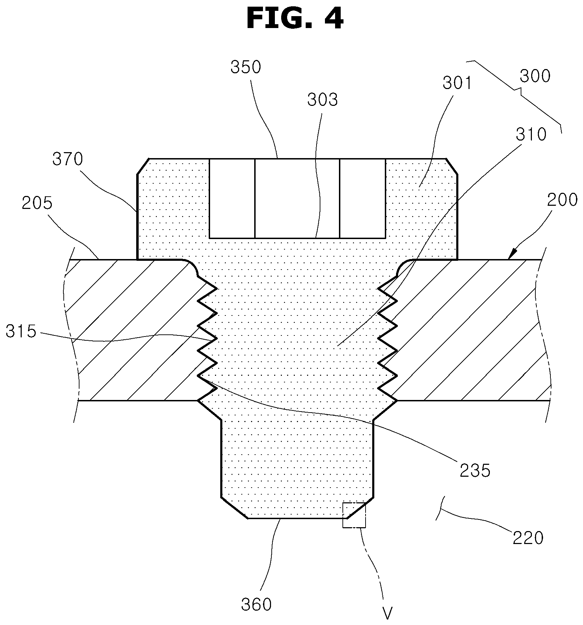

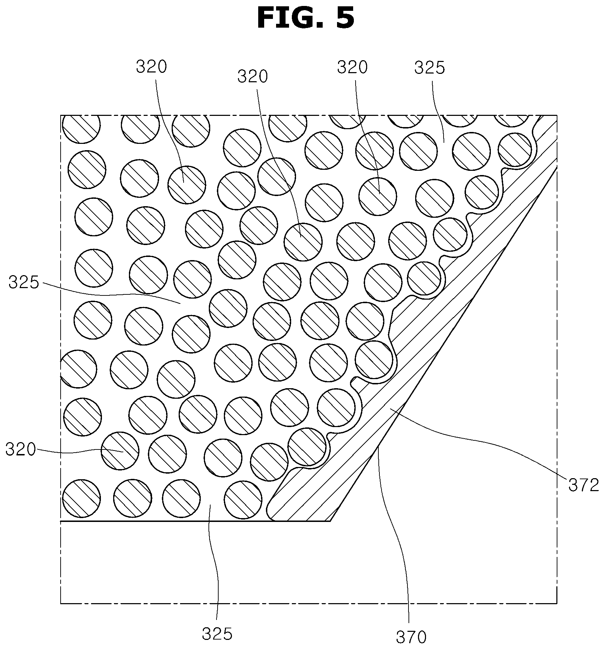

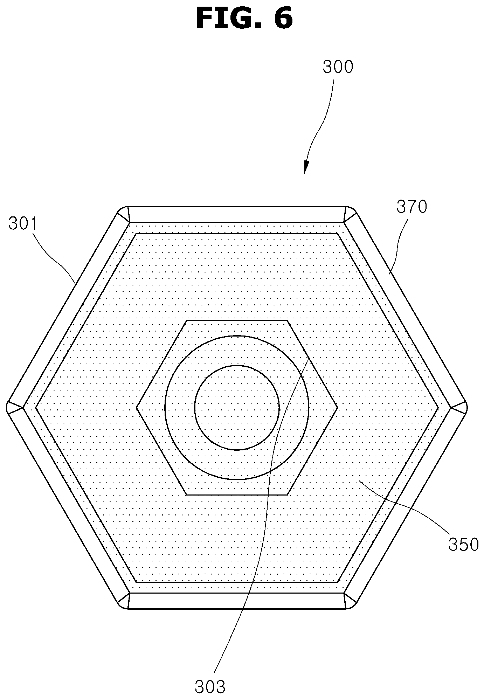

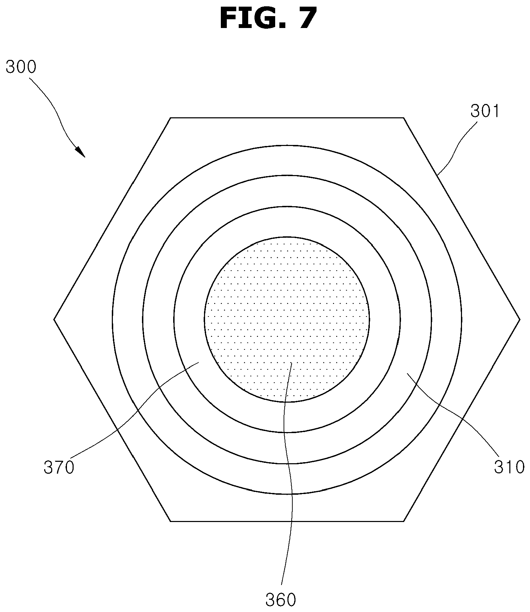

FIG. 3 is an enlarged cross-sectional view illustrating the plug and opening of FIG. 2, illustrating a state in which the opening is opened. FIG. 4 is an enlarged cross-sectional view illustrating a state in which the plug of FIG. 3 closes the opening. FIG. 5 is an enlarged cross-sectional view of portion "V" of FIG. 4. FIG. 6 is a plan view of the plug of FIG. 3. FIG. 7 is a bottom view of the plug of FIG. 3.

Referring to FIG. 1 to FIG. 7, the plug 300 includes a plurality of micropores 325 through which gas passes. The plug 300 may be formed by sintering metal powder 320. For example, the metal powder 320 may include stainless steel powder.

The plug 300 includes a body part 310 and a head part 301. The body part 310 may be a rod-shaped part passing through the opening 230 of the hydraulic block for auxiliary braking 200. A male screw pattern 315 is formed on an outer surface of the body part 310.

A female screw pattern 235 is formed on an inner surface of the opening 230, which engages with the male screw pattern 315 of the body part 310 is engaged. Accordingly, when the plug 300 closes the opening 230, the male screw pattern 315 and the female screw pattern 235 engage, and thus, the plug 300 may not be unintentionally detached from the opening 230.

The head part 301 is connected to an end of the body part 310 and has a diameter larger than the diameter of the body part 310. A tool groove 303 is formed in the head part 301 into which a tool (not illustrated), such as a hex wrench, is inserted.

The plug 300 may be rotated clockwise and counterclockwise with respect to the opening 230 by inserting a tool into the tool groove 303 and rotating the tool. Accordingly, the plug 300 may be fastened to the opening 230 to close the opening 230 or may be detached from the opening 230 to open the opening 230.

Because the diameter of the head part 301 is larger than the diameter of the body part 310, even when the head part 301 is rotated in a direction in which the opening 230 is tightened, the head part 301 may not pass through the opening 315 and be in close contact with the upper surface 205 of the hydraulic block for auxiliary braking 200. In this case, liquid or solid contaminants such as water (H2O), dust, or foreign substances can be prevented from penetrating into the opening 230 between the head part 301 and the upper surface 205.

The plug 300 includes a first surface 350, a second surface 360, and a third surface 370. The first surface 350 may be a surface on which the micropores 325 are exposed to the outside of the hydraulic block for auxiliary braking 200 when the plug 300 is fitted into the opening 230. The first surface 350 may be, for example, an upper surface of the head part 301.

The second surface 360 may be a surface on which the micropores 325 are exposed toward the oil accommodation part 220 when the plug 300 is fitted into the opening 230. The second surface 360 may be, for example, a bottom surface of the body part 310.

The third surface 370 may be a surface on which the micropores 325 are closed. For example, the third surface 370 may be a side surface of the head part 301 and a side surface of the body part 310.

The air accommodated in a space of the oil accommodation part 220 may flow out of the hydraulic block for auxiliary braking 200 through the second surface 360 of the plug 300, the micropores 325 inside the plug 300, and the first surface 350 of the plug 300. In addition, the air outside the hydraulic block for auxiliary braking 200 may flow into the oil accommodation part 220 through the first surface 350 of the plug 300, the micropores 325 inside the plug 300, and the second surface 360 of the plug 300.

Accordingly, the space of the oil accommodation part 220 can be maintained at a pressure equal to or not significantly different from the atmospheric pressure. Accordingly, the hydraulic braking of the redundancy hydraulic circuit part 110 based on a control signal can be precisely controlled, and the operational reliability of the redundancy brake apparatus 100 can be improved.

Liquids and solids may not pass through the micropores 325. Therefore, liquid or solid contaminants such as water (H₂O), dust, and foreign substances cannot penetrate from the outside of the hydraulic block for auxiliary braking 200 into the space of the oil accommodation part 220. Therefore, malfunction or failure due to contamination or corrosion of the hydraulic block for auxiliary braking 200 can be prevented, and the durability of the hydraulic brake apparatus 1 including the redundancy brake apparatus 100 can be improved.

The plug 300 may include a sintered metal material. The third surface 370 of the plug 300 may be formed by machining to cut the surface of the plug 300 using a cutting tool (not illustrated). The surface roughness of the third surface 370 may be less than the surface roughness of the first surface 350 and the surface roughness of the second surface 360.

The method of manufacturing the plug 300 according to an embodiment may include a press-forming operation S100 and a sintering operation S200.

The press-forming operation S100 is an operation of lumping the metal powder 320 in a shape of the plug 300 including the body part 310 and the head part 301. In this operation, a plurality of metal powders 320 may be pressurized such that the gaps between adjacent metal powders 320 do not become excessively large and the plurality of metal powders 320 do not scatter. The metal powder 320 may include, for example, stainless steel powder.

The sintering operation S200 is an operation of heating the plurality of metal powders 320 that are lumped together in the shape of the plug 300 to sinter the metal powders 320 into the plug 300 including the plurality of micropores 325.

In the sintering operation S200, the metal powders 320 may be heated to a temperature at which the metal powders 320 are not completely melt, thereby solidifying the metal powder 320 to have the shape of the plug 300.

The method of manufacturing the plug 300 may further include machining operation S300. The machining operation S300 is an operation of partially machining the surface of the plug 300 such that the third surface 370 is formed, after the sintering operation S200.

The machining operation S300 may include a turning operation of finely cutting the surface of the plug 300 by contacting a cutting tool (not illustrated) with the surface of the plug 300 while holding and rotating the sintered plug 300 with a chuck (not illustrated). However, the turning operation is only an example, and other types of machining, such as milling, may also be applied.

As the surface of the plug 300 is machined, a machined modification layer 372 may be formed in which the micropores 325 exposed to the surface are closed. An outermost surface of the machined modification layer 372 may become the third surface 370.

The machining operation S300 may further include a tapping operation for forming the male screw pattern 315 at the body part 310.

According to the present invention described above, because the hydraulic block for auxiliary braking 200 includes the oil accommodation part 220 for accommodating the brake fluid separately from the main brake fluid reservoir 10, the degree of freedom in the layout of the brake hydraulic circuit can be increased, making the design easy, and the assembly of the hydraulic brake apparatus 1 easy. Therefore, the cost of the hydraulic brake apparatus 1 can be reduced.

In addition, according to the present invention, even when a malfunction or failure occurs in the main brake apparatus 20 and the main brake fluid reservoir 10, the redundancy brake apparatus 100 can reliably brake the vehicle. Accordingly, the redundancy requirement can be satisfied and the safety of the vehicle can be improved.

Although the present invention has been described with reference to the embodiments shown in the drawings, these are merely exemplary, and those skilled in the art will appreciate that various modifications and other equivalent embodiments can be made from these embodiments disclosed herein. Thus, the true technical scope of the invention should be defined by the following claims.

## Claims

1. A redundancy brake apparatus comprising:
a redundancy hydraulic circuit part connected to a main brake apparatus and a wheel cylinder part of a vehicle to allow brake fluid to flow; and
a hydraulic block for auxiliary braking including an oil accommodation part that accommodates the brake fluid and is connected to the redundancy hydraulic circuit part to allow the brake fluid to flow, and an opening formed to allow air to flow into the oil accommodation part.

2. The redundancy brake apparatus of claim 1, further comprising a plug configured to openly close the opening and including a plurality of micropores through which gas passes.

3. The redundancy brake apparatus of claim 2, wherein the plug comprises a first surface on which the micropores are exposed to the outside of the hydraulic block for auxiliary braking and a second surface on which the micropores are exposed toward the oil accommodation part.

4. The redundancy brake apparatus of claim 3, wherein the plug further comprises a third surface with closed micropores.

5. The redundancy brake apparatus of any one of claims 1 to 4, wherein the plug is formed by sintering metal powder.

6. The redundancy brake apparatus of any one of claims 2 to 5,
wherein the plug comprises a body part having a male screw pattern formed on an outer surface thereof through the opening, and
wherein a female screw pattern that engages with the male screw pattern is formed on an inner surface of the opening.

7. The redundancy brake apparatus of any one of claims 1 to 6, wherein the opening is opened to an upper surface of the hydraulic block for auxiliary braking.

8. The redundancy brake apparatus of any one of claims 1 to 7, wherein the redundancy hydraulic circuit part is installed in the hydraulic block for auxiliary braking.

9. A hydraulic brake apparatus comprising:
a main brake fluid reservoir that accommodates brake fluid;
a main brake apparatus configured to provide the brake fluid from the main brake fluid reservoir to a plurality of wheel cylinder parts to brake a vehicle; and
a redundancy brake apparatus including a redundancy hydraulic circuit part configured to provide the brake fluid to at least one wheel cylinder part among the plurality of wheel cylinder parts to brake the vehicle when the main brake apparatus malfunctions and connected to the main brake apparatus and the at least one wheel cylinder part to allow the brake fluid to flow, and a hydraulic block for auxiliary braking including an oil accommodation part accommodating the brake fluid therein and connected to the redundancy hydraulic circuit part to allow the brake fluid to flow and an opening formed to allow air to flow into the oil accommodation part.

10. The hydraulic brake apparatus of claim 9, wherein the redundancy hydraulic circuit part is not directly connected to the main brake fluid reservoir.
